(19) Europäisches Patentamt

European Patent Office

Office européen des brevets

(11) Veröffentlichungsnummer : **0 401 708 B1**

(12) **EUROPÄISCHE PATENTSCHRIFT**

(45) Veröffentlichungstag der Patentschrift :
**19.08.92 Patentblatt 92/34**

(21) Anmeldenummer : **90110481.0**

(22) Anmeldetag : **01.06.90**

(51) Int. Cl.⁵ : **B05B 7/10,** B01F 5/00,
B04C 3/00, F02M 19/03

(54) **Wirbelkammerzerstäuber.**

(30) Priorität : **05.06.89 DE 8906889 U**

(43) Veröffentlichungstag der Anmeldung :
**12.12.90 Patentblatt 90/50**

(45) Bekanntmachung des Hinweises auf die
Patenterteilung :
**19.08.92 Patentblatt 92/34**

(84) Benannte Vertragsstaaten :
**AT BE CH DE ES FR GB IT LI NL SE**

(56) Entgegenhaltungen :
**EP-A- 0 213 329**
**DE-A- 2 741 243**
**DE-A- 3 730 617**
**DE-U- 8 906 889**
**FR-A- 1 005 450**
**GB-A- 708 355**

(73) Patentinhaber : **Wolf, Hartmut**
**Schwimmbadstrasse 11**
**W-6146 Lindenfels (DE)**
Patentinhaber : **Czernawski, Norbert**
**Lessingstrasse 21**
**6140 Benzheim 3 (DE)**

(72) Erfinder : **Wolf, Hartmut**
**Schwimmbadstrasse 11**
**W-6146 Lindenfels (DE)**
Erfinder : **Czernawski, Norbert**
**Lessingstrasse 21**
**6140 Benzheim 3 (DE)**

(74) Vertreter : **Gossel, Hans K., Dipl.-Ing.**
**Lorenz-Seidler-Gossel et al**
**Widenmayerstrasse 23**
**W-8000 München 22 (DE)**

EP 0 401 708 B1

## Beschreibung

Die Erfindung betrifft einen Wirbelkammerzerstäuber mit einem Gehäuse, bestehend aus einem Mantel und diesen verschließende Stirnplatten, wobei in der einen Stirnplatte eine Eintrittsdüse für ein erstes Fluid und in der anderen Stirnplatte ein Auslaßrohr angeordnet ist und wobei den Mantel mindestens zwei Stutzen zum Zuführen eines zweiten Fluids durchsetzen, deren Mittellinien einen Abstand von der Gehäuseachse aufweisen und hierzu etwa rechtwinklig verlaufen.

Wirbelkammerzerstäuber dieser Art sind beispielsweise aus der EP-A-213 329 bekannt. Diese bekannte Wirbelkammer kann beispielsweise als Vergaser einer Brennkraftmaschine oder als Zerstäuber eines Brenners oder eines Düsentriebwerks verwendet werden. Das durch die Eintrittsdüse in die Wirbelkammer eintretende Brennstofffluid wird mittels durch die Stutzen in die Wirbelkammer einströmende Luft, die einen zentrierten und konvergierenden Wirbel bildet, in kleine Kraftstofftröpfchen zerstäubt und fein verteilt. Der verwirbelte Brennstoff-Luftstrahl tritt durch das Auslaßrohr in die entsprechende Brennkammer beispielsweise einer Brennkraftmaschine oder eines beliebigen anderen Brenners ein. Aufgrund ungünstiger Strömungsbedingungen, die im Inneren dieses bekannten Wirbelkammerzerstäubers herrschen, wird jedoch keine ideale Zerstäubung des Brennstoffs innerhalb der Wirbelkammer erreicht. Dies ist daran zu erkennen, daß Abgastests des aus einem einer derartigen Wirbelkammer nachgeschalteten Verbrennungsmotors zu unbefriedigenden Ergebnissen geführt hat. Insbesondere konnte beobachtet werden, daß es schon innerhalb des Wirbelkammerzerstäubers zu ungewünschten Entmischungen und damit zu Ansammlungen der Flüssigkeit in den Eckbereichen zwischen dem Mantel und den Stirnplatten kam.

Auch aus der DE-A-28 28 319 ist ein gattungsgemäßer Wirbelkammerzerstäuber bekannt, der hier als Zerstäuber eines Brenners beschrieben ist. Der dort angesprochene Zerstäuber weist auch eine zylindrische Zerstäubungskammer auf, die ähnlich ungünstige Strömungsbedingungen aufweist wie der zuvor erläuterte Stand der Technik.

Aus der GB-A-708 355 ist bereits eine Wirbelkammer zur Dispergierung eines Feststoffes, einer Flüssigkeit oder eines Gases oder einer Mischung derselben in einem flüssigen Kontinuum bekannt. Die aus diesem Stand der Technik bekannte Dispergierkammer weist einerseits einen zylindrischen und andererseits einen trichterförmigen Teil.

Hieraus stellt sich die Aufgabe, den gattungsgemäßen Wirbelkammerzerstäuber derart weiterzubilden, daß ein möglichst ideal verwirbeltes Flüssigkeits-Luftgemisch unter Vermeidung vorheriger Entmischung innerhalb der Wirbelkammer austritt. Bei Anwendung des Wirbelkammerzerstäubers als Vergaser einer Brennkraftmaschine oder als Zerstäuber ist es demnach ein Ziel, ein möglichst ideal verwirbeltes Kraftstoff-Luftgemisch zu erhalten, dessen Entmischung verhindert wird, so daß die giftigen Abgasbestandteile des nachgeschalteten Verbrennungsmotors bzw. Brenners weitgehend minimiert werden.

Diese Aufgabe wird durch die kennzeichnenden Teile der nebengeordneten Ansprüche 1 und 6 gelöst. Gemäß dieser Lösungen erstrecken sich im Inneren des Gehäuses von der Mantelwandung aus ringförmig umlaufende Einbauten derart ins Gehäuseinnere, daß ein Hohlraum im Inneren des Gehäuses entsteht, der an die Form der im Wirbelkammerzerstäuber erzeugten Primärwirbel weitgehend angepaßt ist. Dieser Lösung liegt die Erkenntnis zugrunde, daß aufgrund der durch die Stutzen tangential eintretenden Luft ein sich in der Achse zentrierender idealer Primärwirbel entsteht, der eine hohe Rotationsgeschwindigkeit aufweist und daher zu eine Feinzerstäubung des durch die Eintrittsdüse in die Wirbelkammer eintretenden Kraft- bzw. Brennstoffs oder einer anderen Flüssigkeit führt. Neben dem sich innerhalb der Brennkammer bildenden Primärwirbel bilden sich aber auch Strömungsbereiche mit Sekundärströmungen, in denen wesentlich geringere Strömungsgeschwindigkeiten herrschen. Dies führt dazu, daß sich innerhalb dieser Bereiche das bereits zerstäubte und verwirbelte Kraftstoff- bzw. Brennstoff-/Luftgemisch wieder entmischt. Derartige Strömungsbereiche sind insbesondere im Kantenbereich zwischen Mantel und Stirnplatten ausgebildet. Durch die ringförmig umlaufenden Einbauten, die möglichst an die Form der im Wirbelkammerzerstäuber erzeugten Primärwirbel angepaßt ist, wird nun die Ausbildung dieser Sekundärwirbelbereiche verhindert. Damit wird auch die unerwünschte Entmischung des bereits zerstäubten Flüssigkeits- bzw. Kraftstoffgemisches unterdrückt. Weiterhin kann angenommen werden, daß die erfindungsgemäßen Einbauten zu einer zusätzlichen Beschleunigungszunahme der Rotationsgeschwindigkeit sowohl zur Eintrittsdüse also auch zur Austrittsöffnung hin führt. In diese Richtung nehmen nämlich die Einbauten jeweils im Durchmesser ab. Bei rotierenden Gasströmungen nimmt die Rotationsgeschwindigkeit mit abnehmendem Durchmesser zu, woraus im Zusammenwirken mit den Einbauten die zuvor geschilderte Beschleunigung und damit bessere Zerstäubung resultiert.

Der sich in der Achse zentrierende ideale Primärwirbel weist nicht nur eine hohe Rotationsgeschwindigkeitkomponente, sondern auch eine Axialgeschwindigkeitskomponente auf. Dabei erfährt die Strömung aufgrund der erfindungsgemäßen Einbauten unmittelbar unterhalb der Eintrittsdüse in der Wirbelkammer eine starke axiale Umlenkung, wobei aufgrund dieser Umlenkung eine zusätzliche Scherkomponente innerhalb der Strömung entsteht, die einen zusätzlichen Zerstäubungseffekt mit sich bringt. Weiterhin werden größere und daher aufgrund ihrer Trägheit nach außen geschleuderte Tropfen, die auf die erfindungsgemäßen Einbauten treffen und dort einen in Schwerkraftrichtung ablaufenden Film bilden, aufgrund der hohen Rotationsgeschwindigkeit der Außenbereiche der Primärwirbel gleich wieder mitgerissen und dadurch zerstäubt. Dies war bei dem Stand der Technik nicht möglich, da die nach außen geschleuderten Tropfen nach Eintreten in die Sekundärwirbelbereiche mit niedrigen Strömungsgeschwindigkeiten nicht mehr von der Kammerinnenwandung weggerissen werden konnten.

Der innerhalb des Primärwirbels nahezu ideal verteilte Kraftstoff tritt mit dem mit hoher Geschwindigkeit rotierenden Wirbel in das zur Brennkammer führende Auslaßrohr ein. Dort kann das ideal vermischte Brennstoffgemisch unter optimaler Ausnutzung des zerstäubten Brennstoffs verbrannt werden. Der erfindungsgemäße Wirbelkammerzerstäuber ist dabei so effektiv, daß er für eine reine Zerstäubungsaufgabe im Unterschied zu demjenigen, der aus der EP-A-213 329 bereits bekannt ist, ohne eine nachgeschaltete Schleuderkammer auskommt, da keine so großen Tröpfchen mehr auftreten, daß sie ausgeschleudert werden müßten.

Damit kann beispielsweise, bei einem Einsatz des Wirbelkammerzerstäubers als Vergaser, der innerhalb des Primärwirbels nahezu ideal verteilte Kraftstoff mit dem mit hoher Geschwindigkeit rotierenden Wirbel in das zur Brennkammer führende Auslaßrohr eintreten. Dort kann dann das ideal vermischte Brennstoffgemisch unter optimaler Ausnutzung des zerstäubten Brennstoffes verbrannt werden.

Besonders vorteilhaft ist es, wenn jeweils Einbauten in beiden zwischen Mantel und Stirnplatte verlaufenden Kantenbereichen angeordnet sind.

Diese Anordnung kann dadurch ausgestaltet werden, daß einerseits die Einbauten entlang derjenigen Stirnplatte, in die das Auslaßrohr einmündet, bis zum Einmündungsbereich des Auslaßrohres vorgezogen sind. Andererseits besteht eine Ausgestaltung darin, auch die im Kantenbereich zwischen dem Mantel und der Stirnplatte, in welche die Eintrittsdüse einmündet, liegenden Einbauten bis ungefähr zur Einmündung der Eintrittsdüse vorzuziehen.

Die Einbauten können entlang der Mantelwandung bis zu den einmündenden Stutzen herangeführt werden.

Die Mittellinien der Stutzen können in einer gemeinsamen, die Gehäuseachse schneidenden Mittelebene liegen.

Gemäß einer weiteren vorteilhaften Ausführungsform sind die Einbauten nur in einem Kantenbereich zwischen Mantel und der Stirnplatte, in welche das Auslaßrohr einmündet, angeordnet. Gleichzeitig sind die den Mantel durchsetzenden Stutzen in ihren Öffnungsbereichen durch ein axial verschiebliches Abdeckelement auf einen beliebig kleinen Querschnitt drosselbar. Dadurch kann der zugeführte Luftvolumenstrom und damit die Fettigkeit des Kraftstoff-Brennstoff-/Luftgemisches eingestellt werden.

Der erfindungsgemäße Wirbelkammerzerstäuber kann vorteilhaft auch mit einer an sich schon aus der EP-A 213 229 bekannten Schleuderkammer kombiniert werden. Dabei mündet das Auslaßrohr des Wirbelkammerzerstäubers als Eintrittsrohr in eine Kammer, die etwa gleichachsig mit einem Auslaßrohr versehen ist. Die inneren Enden der Ein- und Austrittsrohre weisen einen Abstand voneinander auf, wobei die Kammerwände den Bereich dieser inneren Enden mit Abstand umgeben. Weiterhin weist die Kammer radial auswärts des Eintritts- und Auslaßrohres einen Auslaß oder ein Abzugsrohr auf. Die Schleuderkammer wird demnach, wie bereits aus der EP-A 213 329 bekannt, aus den zwischen den inneren Enden des Eintritts- und Auslaßrohrs umgebenden Kammer gebildet. Zwischen den inneren Enden des Einlaß- und Austrittsrohrs dieser Schleuderkammer bildet sich ein stehender Wirbel aus, aus dem eventuell koaleszierte größere oder schwerere Tropfen bzw. Partikel ausgeschleudert werden können.

Es hat sich in vorteilhafter Weise gezeigt, daß der erfindungsgemäße Wirbelkammerzerstäuber auch zur Luftreinigung verwendet werden kann, wenn durch die Eintrittsdüse zur Benetzung von Staubteilchen Wasser oder eine andere Flüssigkeit eingespritzt wird. Die benetzten Staubteilchen können, insbesondere bei Verwendung der obengenannten Schleuderkammer, abgezogen werden, wobei zusätzlich in der benetzenden Flüssigkeit auszuwaschende Gase gelöst sein können.

Der Wirbelkammerzerstäuber ist vorteilhaft auch für Flüssig-Flüssig-Zweiphasengemische einsetzbar. Dadurch kann er in Kläranlagen oder in Raffinierungsanlagen Verwendung finden. Mit der erfindungsgemäßen Vorrichtung lassen sich Emulsionen und Gemische herstellen und diese auch wieder trennen.

Weitere Einzelheiten und Merkmale der Erfindung werden nachstehend anhand der in der Zeichnung dargestellten Ausführungsbeispiele näher erläutert. Es zeigen:

Fig. 1 einen schematischen Querschnitt durch eine erste Ausführungsform eines Wirbelkammerzerstäubers und

Fig. 2 einen schematischen Querschnitt durch eine zweite Ausführungsform eines Wirbelkammerzerstäubers.

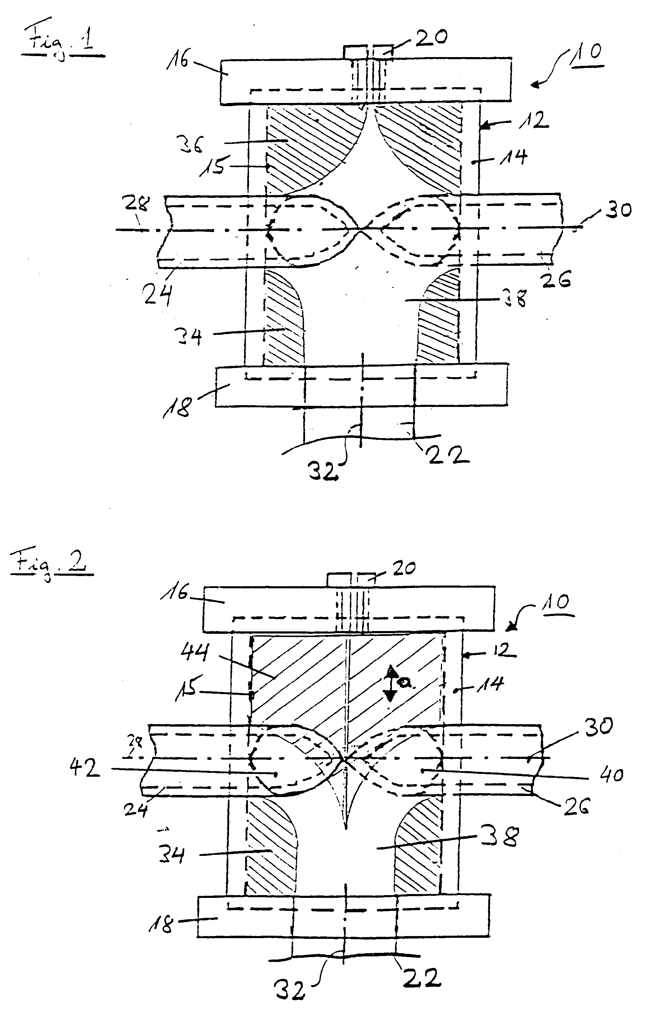

Der Wirbelkammerzerstäuber 10 gemäß Fig. 1 besteht aus einem zylindrischen Gehäuse 12, das endseitig durch mit diesem verbundene Stirnplatten 16, 18 verschlossen ist. In der Quermittelebene des Mantels 14 des Wirbelkammerzerstäubers 10 sind um 180° versetzt zwei Stutzen 24, 26 verbunden. Die Stutzen 24, 26 münden tangential in den Mantel 14 des Wirbelkammerzerstäubers 10 ein. Aufgrund der um 180° versetzten Anordnung der Stutzen 24, 26 verlaufen deren Mittellinien 28, 30 parallel zueinander. Die Mittellinien 28, 30 der Stutzen 24, 26 kreuzen die Gehäuseachse 32 des Wirbelkammerzerstäubers 10 rechtwinkelig.

In die Stirnplatte 18 des Wirbelkammerzerstäubers 10 mündet ein Auslaßrohr 22. In der gegenüberliegenden Stirnplatte 16 ist eine Eintrittsdüse 20 angeordnet. Die Mittellinien des Auslaßrohrs 22 und der Eintrittsdüse 20 fluchten mit der Gehäuseachse 32.

Innerhalb des Gehäuses 12 sind ringförmig am Mantel anschliessende und umlaufende Einbauten 34, 36 angeordnet. Die Einbauten 36 liegen einerseits an der Mantelwandung 15 und andererseits an der Stirnplatte 16 an und füllen den Bereich der Innenkante zwischen der Mantelwandung 15 und der Stirnplatte 16 aus. Dabei sind die Einbauten entlang der Stirnplatte bis zur Einmündung der Eintrittsdüse 20 vorgezogen und entlang der Mantelwandung 15 erstrecken sie sich bis in den Bereich, in welchem die Stutzen 24 bzw. 26 einmünden. Weitere Einbauten 34 erstrecken sich zwischen dem Mantel 14 und der Stirnplatte 18, in welche das Auslaßrohr 22 einmündet. Auch hier sind die Einbauten 34 bis zur Einmündung des Auslaßrohres 22 einerseits und bis zum Einmündungsbereich der Stutzen 24 bzw. 26 im Mantel 14 vorgezogen. Die zum Inneren des Gehäuses 12 weisende Oberfläche der Einbauten 34 bzw. 36 sind konvex nach außen gewölbt und in ihrer Form weitgehend dem sich bildenden Primärwirbel angepaßt.

Beim Einsatz eines Wirbelkammerzerstäubers gemäß dieser Ausführung als Wirbelkammervergaser in einer Brennkraftmaschine können die giftigen Abgasbestandteile, welche aus dem dem Wirbelkammervergaser nachgeschalteten Verbrennungsmotor austreten, entscheidend verringert werden.

Die Ausführungsform des Wirbelkammerzerstäubers 10, welche in Fig. 2 dargestellt ist, entspricht weitgehend derjenigen gemäß Fig. 1. Allerdings weist diese Ausführungsform keine Einbauten 36 zwischen dem Mantel 14 und der die Eintrittsdüse 20 beinhaltenden Stirnplatte 16 auf.

Innerhalb des Gehäuses 12 ist ein Abdeckelement 44 axialverschieblich in Richtung des in Fig. 2 mit a bezeichneten Doppelpfeils angeordnet. Durch das Abdeckelement 44 können die in die Mantelwandung 15 mündenden Öffnungsbereichen 40 bzw. 42 Stutzen 24 bzw. 126 abgedeckt werden. Dadurch kann der zugeführte Luftvolumenstrom und damit das Verhältnis der Kraftstoff-Luft-Mischung stufenlos geregelt werden.

## Patentansprüche

1. Wirbelkammerzerstäuber (10) einem Gehäuse (12), bestehend aus einem Mantel (14) und diesen verschließende Stirnplatten (16,18), wobei in der einen Stirnplatte (16) eine Eintrittsdüse (20) für ein erstes Fluid und in der anderen Stirnplatte (18) ein Auslaßrohr (22) angeordnet ist und wobei den Mantel (14) mindestens zwei Stutzen (24,26) zum Zuführen eines zweiten Fluids durchsetzen, deren Mittellinien (28,30) einen Abstand von der Gehäuseachse (32) aufweisen und hierzu etwa rechtwinklig verlaufen,
**dadurch gekennzeichnet,**
daß sich im Inneren des Gehäuses (12) von der Mantelwandung (15) aus ringförmig umlaufende Einbauten (34; 36) ins Gehäuseinnere erstrecken, wobei Einbauten (34) in einem ersten zwischen den Stutzen, dem Mantel (14) und der das Auslaßrohr (22) aufweisenden Stirnplatte (18) verlaufenden Bereich und Einbauten (36) in einem zweiten zwischen den Stutzen, dem Mantel (14) und der die Eintrittsdüse (20) aufweisenden Stirnplatte (16) verlaufenden Bereich angeordnet sind, so daß ein Hohlraum (38) im Inneren des Gehäuses (12) entsteht, der an die Form von im Wirbelkammerzerstäuber erzeugten Primärwirbel angepaßt ist.

2. Wirbelkammerzerstäuber nach Anspruch 1, dadurch gekennzeichnet, daß die im ersten Bereich angeordneten Einbauten (34) entlang der Stirnplatte (18) bis zur Einmündung des Auslaßrohres (22) vorgezogen sind.

3. Wirbelkammerzerstäuber nach Anspruch 1 oder 2, dadurch gekennzeichnet, daß die im zweiten Bereich angeordneten Einbauten (36) entlange der Stirnplatte (16) zur Einmündung des Eintrittsdüse (20) vorgezogen sind.

4. Wirbelkammerzerstäuber nach einem der Ansprüche 1 bis 3, dadurch gekennzeichnet, daß die Einbauten (34,36) entlang der Mantelwandung (15) bis zu den einmündenden Stutzen (24,26) herangeführt werden.

5. Wirbelkammerzerstäuber nach einem der Ansprüche 1 bis 4, dadurch gekennzeichnet, daß die Mittellinien (28,30) entlang der Stutzen (24,26) in einer gemeinsamen, die Gehäuseachse (32) schneidenden Mittelebene liegen.

6. Wirbelkammerzerstäuber (10) mit einem Gehäuse (12), bestehend aus einem Mantel (14) und diesen verschließenden Stirnplatten (16,18), wobei in der einer Stirnplatte (16) eine Eintrittsdüse (20) für ein erstes Fluid und in der anderen Stirnplatte (18) ein Auslaßrohr (22) angeordnet ist und wobei den Mantel (14) minde-

EP 0 401 708 B1

stens zwei Stutzen (24,26) zum Zuführen eines zweiten Fluids durchsetzen, deren Mittellinien (28,30) einen Abstand von der Gehäuseachse (32) aufweisen und hierzu etwa rechtwinklig verlaufen, dadurch gekennzeichnet, daß sich im Inneren des Gehäuses (12) von der Mantelwandung (15) aus ringförmig umlaufende Einbauten (34) ins Gehäuseinnere erstrecken, wobei die Einbauten (34) in einem Bereich zwischen den Stutzen, dem Mantel und der das Auslaßrohr (22) aufweisenden Stirnplatte (18) verlaufen, so daß ein Hohlraum (38) im Inneren des Gehäuses (12) entsteht, der an die Form von im Wirbelkammerzerstäuber erzeugten Primärwirbel angepaßt ist, und daß die den Mantel (14) durchsetzenden Stutzen (24,26) in ihren Öffnungsbereichen (40,42) durch ein achsial verschiebliches Abdeckelement (44) abdeckbar sind.

7. Wirbelkammerzerstäuber nach Anspruch 6, dadurch gekennzeichnet, daß sich an diesen eine an sich bekannte Schleuderkammer anschließt.


## Claims

1. Whirl chamber atomizer (10) with a housing (12) consisting of a casing (14) and front plates (16,18) sealing the latter, wherein in the one front plate (16) an inlet nozzle (20) for a first fluid and in the other front plate (18) a discharge pipe (22) is arranged and wherein the casing (14) is penetrated by at least two feed pipes (24,26) for supplying a second fluid, the center lines (28,30) of the feed pipes (24,26) being spaced apart from the housing axis (32) and extending approximately perpendicular thereto, characterized in that inside the housing (12) annularly running mountings (34,36) are extending from the casing wall (15) towards the interior of the housing, wherein the mountings (34) are arranged in a first section extending between the feed pipes, the casing (14) and the front plate (18) comprising the discharge pipe (22) and the mountings (36) are arranged in a second section extending between the feed pipes, the casing (14) and the front plate (16) comprising the inlet nozzle (20), so that a hollow space (38) is created inside-the housing (12) which is adapted to the form of the primary whirl produced in the whirl chamber atomizer.

2. Whirl chamber atomizer according to claim 1, charcterized in that the mountings (34) arranged in the first section are pulled forward along the front plate (18) up to the mouth of the discharge pipe (22).

3. Whirl chamber atomizer according to claim 1 or 2, characterized in that the mountings (36) arranged in the second section are pulled forward along the front plate (16) up to the mouth of the inlet nozzle (20).

4. Whirl chamber atomizer according to any one of claims 1 through 3, characterized in that along the casing wall (15) the mountings (34,36) extend up to the feed pipes running thereinto.

5. Whirl chamber atomizer according to any one of claims 1 through 4, characterized in that the center lines (28,30) extend along the feed pipes (24,26) in a common center plane intersecting the housing axis (32).

6. Whirl chamber atomizer (10) with a housing (12), consisting of a casing (14) and front plates (16,18) sealing the latter, wherein in the one front plate (16) an inlet nozzle (20) for a first fluid and in the other front plate (18) a discharge pipe (22) is arranged and wherein the casing (14) is penetrated by at least two feed pipes (24,26) for supplying a second fluid, the center lines (28,30) of the feed pipes (24,26) being spaced apart from the housing axis (32) and extending approximately perpendicular thereto, characterized in that inside the housing (12) annularly running mountings (34,36) are extending from the casing wall (15) towards the interior of the housing, wherein the mountings (34) are arranged in a first section extending between the feed pipes, the casing (14) and the front plate (18) comprising the discharge pipe (22) and the mountings (36) are arranged in a second section extending between the feed pipes, the casing (14) and the front plate (16) comprising the inlet nozzle (20), so that a hollow space (38) is created inside the housing (12) which is adapted to the form of the primary whirl produced in the whirl chamber atomizer, and that the feed pipes (24,26) penetrating the casing (14) can be covered in their opening sections (40,42) by an axially displaceable cover element (44).

7. Whirl chamber atomizer according to claim 6, characterized in that subsequent to the whirl chamber atomizer a known centrifugal chamber is arranged.


## Revendications

1. Pulvérisateur à chambre à tourbillon (10) comprenant un boîtier (12) constitué d'une enveloppe (14) et de plaques frontales (16, 18) fermant celle-ci, dans l'une des plaques frontales (16) étant disposée une buse d'entrée (20) pour un premier fluide et dans l'autre plaque frontale (18) un tuyau de décharge (22), et dans laquelle l'enveloppe (14) est traversée par au moins deux tubulures (24, 26) pour l'amenée d'un deuxième fluide dont les lignes médianes (28, 30) présentent un écart par rapport à l'axe du boîtier (32) et s'étendent à peu près perpendiculairement à celui-ci,

caractérisé en ce que,

dans l'intérieur du boîtier (12), à partir de la paroi de l'enveloppe (15), des inserts s'étendant tout autour de façon annulaire (34,'36) font saillie dans l'intérieur du boîtier, les inserts (34) étant disposés dans une première zone s'étendant entre la tubulure, l'enveloppe (14) et la plaque frontale (18) présentant le tuyau de décharge (22) et les inserts (36) dans une deuxième zone s'étendant entre la tubulure, l'enveloppe (14) et la plaque frontale (16) présentant la buse d'entrée (20) de façon qu'un espace creux (38) est produit dans l'intérieur du boîtier (12), qui est adapté à la forme du tourbillon primaire produit dans le pulvérisateur à chambre à tourbillon.

2. Pulvérisateur à chambre à tourbillon selon la revendication 1, caractérisé en ce que les inserts (34) disposés dans la première zone sont avancés le long de la plaque frontale (18) jusqu'à l'embouchure du tuyau de décharge (22).

3. Pulvérisateur à chambre à tourbillon selon la revendication 1 ou 2, caractérisé en ce que les inserts (36) disposés dans la deuxième zone sont avancés le long de la plaque frontale (16) jusqu'à l'embouchure de la buse d'entrée (20).

4. Pulvérisateur à chambre à tourbillon selon l'une des revendications 1 à 3, caractérisé en ce que les inserts (34, 36) sont amenés le long de la paroi de l'enveloppe (15) jusqu'à l'embouchure des tubulures (24, 26).

5. Pulvérisateur à chambre à tourbillon selon l'une des revendications 1 à , caractérise en ce que les lignes médianes (28, 30) le long des tubulures (24, 26) sont situées dans un plan médian commun qui coupe l'axe de boîtier (32).

6. Pulvérisateur à chambre à tourbillon (10) comprenant un boîtier (12) constitué d'une enveloppe (14) et de plaques frontales fermant celle-ci,-dans l'une des plaques frontales (16) étant disposée une buse d'entrée (20) pour un premier fluide et dans l'autre plaque frontale (18) un tuyau de décharge (22), et dans laquelle l'enveloppe (14) est traversée par au moins deux tubulures (24, 26) pour l'amenée d'un deuxième fluide, dont les lignes médianes (28, 30) présentent un écart par rapport à l'axe de boîtier (32) et s'étendent à peu près perpendiculairement à celui-ci, caractérisé en ce que, dans l'intérieur du boîtier (12), à partir de la paroi de l'enveloppe (15), des inserts (34) s'étendant tout autour de façon annulaire font saillie dans l'intérieur du boîtier, les inserts (34) s'étendant dans une zone entre les tubulures, l'enveloppe et la plaque frontale (18) présentant le tuyau de décharge (18), de façon qu'un espace creux (38) est réalisé dans l'intérieur du boîtier (12), qui est adapté à la forme du tourbillon primaire produit dans le pulvérisateur à chambre à tourbillon, et en ce que les tubulures (24, 26) traversant l'enveloppe (14) peuvent être recouvertes dans leurs zones d'ouverture (40, 42) par un élément de recouvrement (44) pouvant être déplacé axialement.

7. Pulvérisateur à chambre à tourbillon selon la revendication 6, caractérisé en ce qu'une chambre centrifuge connue en soi fait suite à celui-ci.

Fig. 1

Fig. 2